# EUROPÄISCHE PATENTANMELDUNG

(11) **EP 2 937 128 A1**
(43) Veröffentlichungstag der Anmeldung: **28.10.2015**
(21) Anmeldenummer: 14166050.6
(22) Anmeldetag: 25.04.2014
(51) Int. Cl.: B01D 46/00, B01D 46/44

(54) **Überwachung einer druckgasbasierten Abreinigung bei einer Schlauchfilteranlage**

(71) Anmelder: Siemens VAI Metals Technologies GmbH, 4031 Linz (AT)
(72) Erfinder: Lauterbrunner, Herbert, 4033 Linz (AT); Mair, Stefan, 9911 Thal-Assling (AT); Lehofer, Martin, 4050 Traun (AT); Rohrhofer, Andreas, 4020 Linz (AT)
(74) Vertreter: Maier, Daniel Oliver

(57) **Zusammenfassung**

Die Erfindung betrifft ein Verfahren zur Überwachung einer druckgasbasierten Abreinigung bei einer Schlauchfilteranlage (2). Um eine aufwands-/kostengünstige Überwachung einer druckgasbasierten Abreinigung bei einer Schlauchfilteranlage (2) zu erreichen, wird vorgeschlagen, dass bei einem Abreinigungsvorgang während eines vorgebbaren Zeitraums (T) ein Durchfluss (Q) einer Druckgasströmung ermittelt wird, unter Verwendung des ermittelten Durchflusses (Q) der Druckgasströmung eine Durchflusscharakteristik (V) ermittelt wird und unter Verwendung der Durchflusscharakteristik (V) die druckgasbasierte Abreinigung überwacht wird.

Ferner betrifft die Erfindung ein Überwachungssystem (40) für eine Schlauchfilteranlage (2), aufweisend zumindest einen Durchflusssensor (44) zum Ermitteln eines Durchflusses (Q) einer Druckgasströmung und eine Kontrolleinheit (42) zum Steuern einer druckgasbasierten Abreinigung, wobei die Kontrolleinheit (42) zur Durchführung des Verfahrens eingerichtet ist. Weiterhin betrifft die Erfindung eine Schlauchfilteranlage (2) mit einer Mehrzahl von Schlauchfiltern (4) und einem solchen Überwachungssystem (40).

## Beschreibung

Die Erfindung betrifft ein Verfahren zur Überwachung einer druckgasbasierten Abreinigung bei einer Schlauchfilteranlage. Ferner betrifft die Erfindung ein Überwachungssystem für eine Schlauchfilteranlage, aufweisend zumindest einen Durchflusssensor zum Ermitteln eines Durchflusses einer Druckgasströmung und eine Kontrolleinheit zum Steuern einer druckgasbasierten Abreinigung. Weiterhin betrifft die Erfindung eine Schlauchfilteranlage mit einer Mehrzahl von Schlauchfiltern.

Bei vielen industriellen Prozessen, insbesondere bei metallurgischen Prozessen, werden Abgase erzeugt, die große Mengen an Staubpartikeln enthalten. Aus Gründen des Umweltschutzes müssen solche Abgase entstaubt werden, bevor sie in die Atmosphäre entlassen werden.

Es sind mehrere Verfahren zur Entstaubung eines Abgases bekannt. In der Regel lassen sich diese Verfahren einer der vier Entstaubungsarten zuordnen: mechanische Entstaubung, Elektroentstaubung, Nassentstaubung oder Filtrations- bzw. Trockenentstaubung.

Bei der mechanischen Entstaubung macht man sich die Schwerkraft, Trägheitskraft und/oder Fliehkraft der Staubpartikel zunutze, um die Staubpartikel aus dem Abgas abzuscheiden.

Die Elektroentstaubung beruht auf dem Prinzip, dass elektrisch geladene Staubpartikel in einem elektrischen Feld von einer entgegengesetzt geladenen Elektrode angezogen und gebunden werden.

Die Nassentstaubung sieht vor, das staubhaltige Abgas mit einer Waschflüssigkeit in Kontakt zu bringen, in welcher die Staubpartikel gebunden werden, wodurch die Staubpartikel aus dem Abgas entfernt werden.

Bei der Filtrationsentstaubung trifft das staubhaltige Abgas auf einen Filter, der die Staubpartikel zurückhält und das entstaubte Abgas durchlässt.

Die Filtrationsentstaubung zeichnet sich durch eine hohe Entstaubungseffizienz aus. Typischerweise werden bei der Filtrationsentstaubung mehr als 99% der Staubpartikel aus dem Abgas herausgefiltert. In vielen industriellen Bereichen wird der Filtrationsentstaubung deshalb gegenüber den anderen Entstaubungsarten der Vorzug gegeben.

Die Entstaubung/Filtration erfolgt bei der Filtrationsentstaubung üblicherweise mithilfe einer Schlauchfilteranlage, die eine Mehrzahl von Schlauchfiltern (bis zu mehrere tausend) umfasst. Das zu reinigende, staubhaltige Abgas wird in die Schlauchfilteranlage eingeleitet. Anschließend strömt das Abgas in die Schlauchfilter hinein. Dabei werden die Staubpartikel an einer Oberfläche des jeweiligen Schlauchfilters bzw. an einer Oberfläche einer sich auf dem Schlauchfilter ausbildenden/wachsenden Partikelschicht (dem sog. Filterkuchen) abgeschieden. Das auf diese Weise gereinigte Abgas strömt anschließend aus dem jeweiligen Schlauchfilter heraus.

Mit zunehmender Filterkuchendicke erhöht sich ein Strömungswiderstand für das Abgas. Da mit zunehmendem Strömungswiderstand ein Abgasdurchsatz der Schlauchfilteranlage abnimmt, werden die Schlauchfilter bei einer vorgegebenen Filterkuchendicke abgereinigt. Auf diese Weise kann auch bei langer Betriebsdauer der Schlauchfilteranlage ein möglichst hoher Abgasdurchsatz und eine möglichst hohe Entstaubungseffizienz sichergestellt werden.

Es sind mehrere Verfahren zur Abreinigung von Schlauchfiltern bekannt. Das sog. Druckstoßverfahren (Pulse-Jet-Abreinigung) hat sich weitgehend als Standard durchgesetzt, u.a. weil bei diesem Verfahren die Abreinigung der Schlauchfilter, verglichen mit anderen bekannten Verfahren, sehr effektiv ist und der Entstaubungs-/Filtrationsvorgang für die Abreinigung nicht unterbrochen werden muss.

Beim Druckstoßverfahren werden die Schlauchfilter mithilfe eines Druckgases abgereinigt. Dabei wird in den Schlauchfiltern mithilfe des Druckgases jeweils ein kurzer (ca. 0,1 s langer) Druckstoß erzeugt. Ein solcher Druckstoß breitet sich in Längsrichtung des jeweiligen Schlauchfilters aus und dehnt dabei den Schlauchfilter wellenartig quer zur Längsrichtung, wodurch der Filterkuchen vom Schlauchfilter ablöst wird.

Zur Erzeugung der Druckstöße wird das Druckgas aus Druckgasspeichern mithilfe von Druckgasleitungen zu den Schlauchfiltern geführt wird und in die Schlauchfilter eingeleitet. Das Einleiten des Druckgases wird dabei unter Verwendung von Ventilen gesteuert, die in den Druckgasleitungen angeordnet sind.

Um einen möglichst hohen Abgasdurchsatz und eine möglichst hohe Entstaubungseffizienz der Schlauchfilteranlage sicherzustellen, müssen die Schlauchfilter wie vorgesehen abgereinigt werden. Wird die Abreinigung bzw. eine Effizienz der Abreinigung beeinträchtigt, z.B. aufgrund eines Defekts eines Elements der Schlauchfilteranlage, sinken der Abgasdurchsatz und die Entstaubungseffizienz der Schlauchfilteranlage. Daher ist es bei Schlauchfilteranlagen üblich, eine solche druckgasbasierte Abreinigung zu überwachen, um eine mögliche Beeinträchtigung der Abreinigung erkennen und ggf. beheben zu können.

Ein bekanntes Überwachungsverfahren sieht vor, einen Stromfluss im jeweiligen Ventil zu erfassen und auszuwerten. Dieses Überwachungsverfahren erlaubt zwar eine Aussage über einen elektrischen Zustand bzw. ein elektrisches Verhalten des Ventils. Beispielsweise kann festgestellt werden, ob ein Kabelbruch oder ein Kurzschluss vorliegt. Jedoch erlaubt dieses Überwachungsverfahren keine Aussage über einen mechanischen Zustand bzw. ein mechanisches Verhalten des Ventils oder weiterer Elemente der Schlauchfilteranlage. Mit diesem Überwachungsverfahren werden also mechanische Schäden der Schlauchfilteranlage nicht erkannt. Außerdem ist dieses Überwachungsverfahren aufwendig/kostenintensiv, da jedes Ventil einzeln überwacht werden muss.

Ein anderes Überwachungsverfahren sieht eine manuelle akustische Diagnose eines Abreinigungsknalls, der bei der Erzeugung des Druckstoßes entsteht, durch Bedienpersonal vor. Dabei hört sich das Bedienpersonal den Abreinigungsknall an und entscheidet aufgrund von Erfahrungswerten, ob die Abreinigung korrekt erfolgt ist. Dieses Überwachungsverfahren ist aufgrund mangelnder Objektivität von Erfahrungswerten und von menschlicher Wahrnehmung nicht zuverlässig. Zudem ist dieses Überwachungsverfahren mit einem hohen Zeit-/Arbeitsaufwand für das Bedienpersonal verbunden, da eine Schlauchfilteranlage eine Vielzahl von Schlauchfiltern umfasst, welche sequentiell während eines Betriebs der Schlauchfilteranlage überwacht werden müssen. Weiterhin ist es bei manchen Schlauchfilteranlagen aufgrund von Sicherheitsvorschriften verboten, diese während des Betriebs zu betreten, sodass dieses Überwachungsverfahren gar nicht angewendet werden kann.

Bei einem weiteren Überwachungsverfahren wird eine akustische Diagnose eines solchen Abreinigungsknalls automatisiert durchgeführt, wobei der Abreinigungsknall mittels eines akustischen Sensors aufgenommen und ausgewertet wird. Dieses Überwachungsverfahren hat den Nachteil, dass eine Vielzahl solcher akustischen Sensoren und zugehöriger Datenleitungen zur Überwachung der gesamten Schlauchfilter notwendig ist. Deshalb ist ein System zur Durchführung dieses Überwachungsverfahren aufwendig in seiner Installation sowie kostenintensiv. Indirekt ist somit auch das Überwachungsverfahren kostenintensiv.

Eine Aufgabe der Erfindung ist, ein Verfahren zur aufwands-/kostengünstigen Überwachung einer druckgasbasierten Abreinigung bei einer Schlauchfilteranlage sowie ein Überwachungssystem und eine Schlauchfilteranlage zur Durchführung des Verfahrens anzugeben.

Diese Aufgabe wird erfindungsgemäß durch ein Verfahren, ein Überwachungssystem und eine Schlauchfilteranlage mit den Merkmalen gemäß dem jeweiligen unabhängigen Anspruch gelöst. Vorteilhafte Ausgestaltungen/Weiterbildungen sind Gegenstand der abhängigen Ansprüche sowie der nachfolgenden Beschreibung und können sich sowohl auf das Verfahren als auch auf das Überwachungssystem und/oder die Schlauchfilteranlage beziehen.

Das erfindungsgemäße Verfahren sieht vor, dass bei einem Abreinigungsvorgang während eines vorgebbaren Zeitraums ein Durchfluss einer Druckgasströmung ermittelt wird, unter Verwendung des ermittelten Durchflusses der Druckgasströmung eine Durchflusscharakteristik ermittelt wird und unter Verwendung der Durchflusscharakteristik die druckgasbasierte Abreinigung überwacht wird.

Ein Vorteil des Verfahrens ist, dass es eine automatisierte Überwachung einer druckgasbasierten Abreinigung ermöglicht. Somit ist es möglich, dass Verfahren schnell und zuverlässig durchzuführen. Ein weiterer Vorteil ist, dass eine Anzahl von Geräten/Vorrichtungen, die zur Durchführung des Verfahrens benötigten werden, nicht an eine Anzahl von Ventilen und/oder Schlauchfiltern der Schlauchfilteranlage gekoppelt ist.

Als Druckgas kann ein Gas/Gasgemisch aufgefasst werden, welches einen Gasdruck aufweist, der größer ist als atmosphärischer Druck. Vorzugsweise hat das Druckgas einen Gasdruck von einigen bar. Bei einer Herstellung und/oder Verarbeitung des Druckgases kann z.B. ein Kompressor zum Einsatz kommen. Das Druckgas kann aus Stickstoff, Kohlendioxid und/oder einem anderen Gas, insbesondere einem Inertgas, bestehen bzw. diese Gase neben einem oder mehreren weiteren Gasen enthalten. Vorteilhafterweise handelt es sich bei dem Druckgas um Druckluft, da Druckluft aufwands-/kostengünstig herstellbar ist.

Unter dem Durchfluss der Druckgasströmung kann ein Volumen-/Massenstrom der Druckgasströmung in einem Strömungsführungselement, wie z.B. einer Druckgasleitungen, verstanden werden.

Die Ermittlung des Durchflusses kann unter Verwendung eines Durchflusssensors erfolgen. Zweckmäßigerweise erzeugt der Durchflusssensor ein Signal ("Durchflusssignal"), welches dem ermittelten Durchfluss entspricht.

Sinnvollerweise umfasst der Abreinigungsvorgang ein Abreinigen zumindest eines Schlauchfilters der Schlauchfilteranlage. Vorzugsweise wird beim Abreinigungsvorgang eine Schlauchfiltergruppe der Schlauchfilteranlage abgereinigt.

Als Schlauchfiltergruppe kann eine Gruppe von Schlauchfiltern aufgefasst, bei der die Schlauchfilter simultan mit einem Druckgas versorgbar sind, insbesondere unter Verwendung eines gemeinsamen Ventils zum Steuern einer Druckgaszufuhr zu den Schlauchfiltern.

Weiterhin ist es möglich, dass beim Abreinigungsvorgang im sog. Simultanbetrieb eine Mehrzahl von Schlauchfiltergruppen simultan abgereinigt wird.

In bevorzugter Weise werden unterschiedliche Schlauchfiltergruppen der Schlauchfilteranlage sequentiell, d.h. nacheinander, in jeweils einem eigenen Abreinigungsvorgang abgereinigt. Außerdem werden die Schlauchfiltergruppen vorzugsweise zyklisch abgereinigt. Ein Abreinigungszyklus kann eine sequentielle Abreinigung aller Schlauchfiltergruppen der Schlauchfilteranlage in jeweils einem eigenen Abreinigungsvorgang umfassen. Nach Ablauf des Abreinigungszyklus kann ein weiterer oder eine Mehrzahl weiterer solcher Abreinigungszyklus ablaufen.

Weiterhin ist es auch möglich, dass die Schlauchfilter bzw. Schlauchfiltergruppen individuell in Abhängigkeit ihres jeweiligen Verschmutzungsgrads, anstatt gemäß einem Abreinigungszyklus abgereinigt werden.

Der vorgebbare Zeitraum kann derart vorgegeben werden, dass die Ermittlung der Durchflusscharakteristik zeitgleich mit Beginn des Abreinigungsvorgangs oder mit einer vorgebbaren Zeitverzögerung nach Beginn des Abreinigungsvorgangs gestartet wird.

Ferner wird der vorgebbare Zeitraum sinnvollerweise derart vorgegeben, dass die Ermittlung der Durchflusscharakteristik spätestens dann beendet wird, wenn ein zeitlich auf den Abreinigungsvorgang folgender weiterer Abreinigungsvorgang begonnen wird.

Zweckmäßigerweise ist die Durchflusscharakteristik ein Derivat des Durchflusses. Als Derivat des Durchflusses kann eine vom Durchfluss abgeleitete bzw. vom Durchfluss abhängige Größe aufgefasst werden. Ein solches Derivat des Durchflusses kann beispielsweise eine im vorgebbaren Zeitraum geflossene Druckgasmenge oder ein Zeitverhalten des Durchflusses sein.

Unter der im vorgebbaren Zeitraum geflossenen Druckgasmenge kann eine Masse oder ein Volumen des im vorgebbaren Zeitraum durch ein Strömungsführungselement, z.B. eine Druckgasleitungen, geflossenen Druckgases verstanden werden. Das Zeitverhalten des Durchflusses kann z.B. eine zeitliche Änderungsrate des Durchflusses sein.

Des Weiteren kann die Durchflusscharakteristik einen einzelnen Wert oder eine Mehrzahl von Werten umfassen. Eine solche Mehrzahl von Werten kann z.B. einen Verlauf, insbesondere einen zeitlichen Verlauf, eines Derivats des Durchflusses repräsentieren.

Die Durchflusscharakteristik kann u.a. durch ein Aufintegrieren, ein Ableiten und/oder eine Fourier-Analyse des Durchflusses ermittelt werden. Ferner kann die Ermittlung der Durchflusscharakteristik weitere Schritte umfassen. So kann z.B. die Ermittlung der Durchflusscharakteristik eine Filterung des vom Durchflusssensor erzeugten Durchflusssignals umfassen, insbesondere unter Verwendung eines Hoch-, Tief- und/oder Bandpassfilters.

Weiterhin kann der Abreinigungsvorgang ein Auffüllen zumindest eines Druckgasspeichers während eines Auffüllzeitraums umfassen. Das Auffüllen kann z.B. unter Verwendung eines Kompressors erfolgen. Als Auffüllzeitraum kann derjenige Zeitraum aufgefasst werden, in dem das Druckgas in den Druckgasspeicher eingeleitet wird, um diesen aufzufüllen.

Es ist zweckmäßig, wenn der Druckgasspeicher unter Verwendung der Druckgasströmung aufgefüllt wird, deren Durchfluss ermittelt wird. Dadurch kann unter Verwendung des Durchflusses eine beim Abreinigungsvorgang in den Druckgasspeicher eingeleitete Druckgasmenge ermittelt werden. Weiter ist es zweckmäßig, wenn der vorgebbare Zeitraum innerhalb des Auffüllzeitraums liegt.

Die Überwachung kann ein Vergleichen der ermittelten Durchflusscharakteristik mit zumindest einer vorgegebenen Referenz-Durchflusscharakteristik umfassen. Eine solche Referenz-Durchflusscharakteristik kann z.B. eine Ober-/Untergrenze für die Durchflusscharakteristik sein.

Die Referenz-Durchflusscharakteristik kann davon abhängen, wie viele Schlauchfilter/Schlauchfiltergruppen simultan beim Abreinigungsvorgang abgereinigt werden. Falls z.B. beim Abreinigungsvorgang zwei Schlauchfilter/Schlauchfiltergruppen simultan abgereinigt werden, kann die Referenz-Durchflusscharakteristik doppelt so groß sein wie für den Fall, dass beim Abreinigung ein Schlauchfilter/eine Schlauchfiltergruppe abgereinigt wird.

Die Referenz-Durchflusscharakteristik kann außerdem davon abhängen, wann innerhalb des Abreinigungszyklus der Schlauchfilter/die Schlauchfiltergruppe abgereinigt wird.

Zweckmäßigerweise wird bei der Überwachung eine Fehlermeldung ausgegeben, falls die ermittelte Durchflusscharakteristik einer vorgegebenen Bedingung hinsichtlich der Referenz-Durchflusscharakteristik genügt. Die vorgegebene Bedingung kann eine mathematische Relation zwischen der ermittelten Durchflusscharakteristik und der Referenz-Durchflusscharakteristik umfassen. So kann die vorgegebene Bedingung dergestalt sein, dass eine Fehlermeldung ausgegeben wird, wenn die ermittelte Durchflusscharakteristik größer, kleiner oder gleich der Referenz-Durchflusscharakteristik ist.

In bevorzugter Weise wird beim Abreinigungsvorgang zumindest ein Druckstoß erzeugt. Der Abreinigungsvorgang kann also als Druckstoßabreinigung ausgeführt werden. Sinnvollerweise wird in jedem Schlauchfilter, der beim Abreinigungsvorgang abgereinigt wird, zumindest ein Druckstoß erzeugt.

Des Weiteren kann das erfindungsgemäße Verfahren und/oder zumindest eine der weiter oben beschriebenen Weiterbildungen zur Detektion eines Schlauchfilteranlagendefekts, insbesondere eines Defekts eines Ventils, einer Druckgasleitung und/oder eines Schlauchfilters, eingesetzt werden. Hierbei wird zweckmäßigerweise die Durchflusscharakteristik mit zumindest einer vorgegebenen Referenz-Durchflusscharakteristik verglichen, die eine intakte Schlauchfilteranlage, insbesondere ein intaktes Ventil, eine intakte Druckgasleitung und/oder einen intakten Schlauchfilter, repräsentiert. Sinnvollerweise wird eine solche Referenz-Durchflusscharakteristik zuvor bei einer Abreinigung bei einer intakten Schlauchfilteranlage unter vorgegebenen Bedingungen aufgenommen.

Alternativ ist es möglich, dass die Referenz-Durchflusscharakteristik eine defekte Schlauchfilteranlage repräsentiert. In solch einem Fall, wird die Referenz-Durchflusscharakteristik sinnvollerweise zuvor bei einer Abreinigung bei einer defekten, insbesondere in vorgegebener Weise mit einem Defekt präparierten, Schlauchfilteranlage aufgenommen. Insbesondere können zuvor mehrere Referenz-Durchflusscharakteristiken aufgenommen werden, wobei bei jeder dieser Aufnahmen der Referenz-Durchflusscharakteristiken jeweils ein anderer Schlauchfilteranlagendefekt vorliegen kann. Dadurch kann jeder dieser mehreren Referenz-Durchflusscharakteristiken ein möglicher Schlauchfilteranlagendefekt zugeordnet werden.

Die zuvor erwähnte Fehlermeldung kann u.a. einen oder mehrere Vorschläge enthalten, welche Art von Defekt, z.B. ein Defekt eines Ventils, einer Druckgasleitung und/oder eines Schlauchfilters, vorliegen könnte. Zweckmäßigerweise lässt sich aus dem Vergleich der Durchflusscharakteristik mit der Referenz-Durchflusscharakteristik ableiten, welche Art von Defekt vorliegt.

Außerdem kann die Fehlermeldung eine eindeutige Kennzeichnung eines als defekt vermuteten Elements/Bauteils der Schlauchfilteranlage enthalten. Auf diese Weise kann das Element/Bauteil bei Wartungs-/Reparaturarbeiten gezielt auf seine Funktionsfähigkeit hin untersucht und ggf. ausgetauscht/repariert werden kann.

Es ist möglich, das erfindungsgemäße Verfahren und/oder zumindest eine der weiter oben beschriebenen Weiterbildungen bei einer Mehrzahl solcher Abreinigungsvorgänge durchzuführen. In bevorzugter Weise wird bei mehreren, insbesondere bei allen, dieser Abreinigungsvorgänge jeweils eine solche Durchflusscharakteristik ermittelt. Unter Verwendung der Durchflusscharakteristiken kann eine Trendanalyse durchgeführt werden, bei der vorzugsweise zumindest ein Trendmodell erstellt wird.

Die Trendanalyse kann eine Extrapolation zur Vorhersage der Durchflusscharakteristik bei künftigen/folgenden Abreinigungsvorgängen umfassen.

Zweckmäßigerweise wird bei jedem Abreinigungsvorgang die jeweils ermittelte Durchflusscharakteristik in einem Datenspeicher gespeichert, sodass bei der Trendanalyse auf Durchflusscharakteristiken vorausgegangener Abreinigungsvorgänge zurückgegriffen werden kann.

Zur Früherkennung eines Schlauchfilteranlagendefekts, insbesondere eines Defekts eines Ventils, einer Druckgasleitung und/oder eines Schlauchfilters, kann unter Verwendung des Trendmodells ermittelt werden, wie viele Abreinigungsvorgänge durchführbar sind, bis ein solcher Schlauchfilteranlagendefekt auftritt.

Weiterhin kann eine Warnmeldung ausgegeben werden, wenn eine Anzahl der noch durchführbaren Abreinigungsvorgänge, bis ein solcher Schlauchfilteranlagendefekt auftritt, kleiner ist als eine vorgegebene Anzahl. Die Warnmeldung kann eine eindeutige Kennzeichnung eines Elements/Bauteils der Schlauchfilteranlage enthalten, bei dem ein solcher Schlauchfilteranlagendefekt droht. Auf diese Weise kann das Element/Bauteil bei Wartungs-/Reparaturarbeiten gezielt ausgetauscht oder repariert werden kann.

Das erfindungsgemäße Überwachungssystem weist zumindest einen Durchflusssensor zum Ermitteln eines Durchflusses einer Druckgasströmung und eine Kontrolleinheit zum Steuern einer druckgasbasierten Abreinigung auf, wobei die Kontrolleinheit zur Durchführung des erfindungsgemäßen Verfahrens und/oder zur Durchführung zumindest einer der weiter oben beschriebenen Weiterbildungen eingerichtet ist.

Der Durchflusssensor kann z.B. als Volumenstromsensor oder als Massenstromsensor ausgeführt sein. Zweckmäßigerweise ist der Durchflusssensor dazu eingerichtet, ein Durchflusssignal bereitzustellen, das dem ermittelten Durchfluss der Druckgasströmung entspricht. Weiter ist es zweckmäßig, wenn der Durchflusssensor zur Datenübertragung, insbesondere zur Übertragung des Durchflusssignals, an die Kontrolleinheit vorbereitet ist. Die Datenübertragung kann drahtlos, z.B. per Funktechnik, oder drahtgebunden, z.B. über eine elektrische Leitung oder ein Glasfaserkabel, erfolgen.

Die Kontrolleinheit kann z.B. als programmierbarer Computer ausgeführt sein. Ferner kann die Kontrolleinheit einen Datenspeicher, insbesondere zum Speichern zumindest einer Durchflusscharakteristik und/oder zumindest einer Referenz-Durchflusscharakteristik, aufweisen. Zweckmäßigerweise ist in der Kontrolleinheit, insbesondere im Datenspeicher, zumindest eine Referenz-Durchflusscharakteristik hinterlegt. In der Kontrolleinheit kann ferner ein Auswertealgorithmus hinterlegt sein.

Der Auswertealgorithmus kann zur Berechnung einer Durchflusscharakteristik, insbesondere unter Verwendung des Durchflusssignals, eingerichtet sein. Weiterhin kann der Auswertealgorithmus dazu eingerichtet sein, die Durchflusscharakteristik mit der Referenz-Durchflusscharakteristik zu vergleichen. Außerdem kann der Auswertealgorithmus zur Durchführung einer Trendanalyse eingerichtet sein, wobei bei der Trendanalyse vorzugsweise zumindest ein Trendmodell erstellt wird.

Des Weiteren kann das Überwachungssystem als ein Condition-Monitoring-System ausgeführt sein. Vorzugsweise ist die Kontrolleinheit zur Übermittlung einer Meldung, insbesondere einer Fehlermeldung, an ein Anzeige-/Bediengerät eingerichtet. Sinnvollerweise ist die Kontrolleinheit zur Datenübertragung, insbesondere zur Übermittlung der Meldung, an das Anzeige-/Bediengerät vorbereitet. Die Datenübertragung kann hierbei drahtlos, z.B. per Funktechnik, oder drahtgebunden, z.B. über eine elektrische Leitung oder ein Glasfaserkabel, erfolgen. Die Meldung kann u.a. in Form einer E-Mail oder SMS an das Anzeige-/Bediengerät übermittelt werden.

Das Anzeige-/Bediengerät kann ein mobiles Gerät sein, z.B. ein Smartphone, ein Tabletcomputer oder ein Notebook. Des Weiteren kann das Anzeige-/Bediengerät aber auch ein stationäres Gerät sein, wie z.B. ein stationärer Bildschirm oder ein stationärer Computer. Ein solches stationäres Anzeige-/Bediengerät kann ein Bestandteil des Überwachungssystems sein.

Die erfindungsgemäße Schlauchfilteranlage ist mit einem solchen Überwachungssystem ausgestattet.

Ferner ist die Schlauchfilteranlage zweckmäßigerweise mit zumindest einem Druckgasspeicher ausgestattet. Der Druckgasspeicher kann z.B. als ein Gasbehälter ausgeführt sein. Weiter ist es zweckmäßig, wenn die Schlauchfilteranlage zumindest eine Druckgasleitung zur Versorgung des Druckgasspeichers mit einem Druckgas aufweist. Der zuvor erwähnte Durchflusssensor des Überwachungssystems ist vorteilhafterweise in einer solchen Druckgasleitung angeordnet. Dies ermöglicht es, einen Durchfluss einer Druckgasströmung, mittels welcher der Druckgasspeicher aufgefüllt wird, zu ermitteln.

In bevorzugter Weise ist die Schlauchfilteranlage mit mehreren Druckgasspeichern ausgestattet. Darüber hinaus weist die Schlauchfilteranlage vorzugsweise eine Hauptdruckgasleitung zur Versorgung der mehreren Druckgasspeicher mit dem Druckgas auf.

Unter der Hauptdruckgasleitung kann vorliegend eine Druckgasleitung verstanden werden, die an einer ersten Seite (Ausgangsseite) mit mehreren weiteren Druckgasleitungen verbunden ist sowie zur Versorgung dieser weiteren Druckgasleitungen mit dem Druckgas vorgesehen ist. Die weiteren Druckgasleitungen wiederum können zur Versorgung der mehreren Druckgasspeicher mit dem Druckgas vorgesehen sein, wobei jeder der mehreren Druckgasspeicher mit jeweils einer der weiteren Druckgasleitungen verbunden sein kann. An einer zweiten Seite (Eingangsseite) kann die Hauptdruckgasleitung mit einem Kompressor verbunden sein.

Vorzugsweise ist der zuvor erwähnte Durchflusssensor des Überwachungssystems in der Hauptdruckgasleitung angeordnet. Dadurch ist es möglich, ohne weitere Durchflusssensoren bei jeder Druckgasströmung, mittels der ein beliebiger der mehreren Druckgasspeicher aufgefüllt wird, einen Durchfluss einer zu ermitteln. Denn jede Druckgasströmung, mittels der ein beliebiger der mehreren Druckgasspeicher aufgefüllt wird, strömt zunächst durch die Hauptdruckgasleitung, bevor die Druckgasströmung in den jeweiligen Druckgasspeicher einströmt.

Auch wenn in der Beschreibung und/oder in den Patentansprüchen einige Begriffe jeweils im Singular oder in Verbindung mit einem bestimmten Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die bisher gegebene Beschreibung vorteilhafter Ausgestaltungen enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren und den erfindungsgemäßen Vorrichtungen kombinierbar.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale. Außerdem können dazu geeignete Merkmale des Ausführungsbeispiels auch explizit isoliert betrachtet und/oder mit einem beliebigen der Ansprüche kombiniert werden.

Es zeigen:
- FIG 1: eine Schlauchfilteranlage mit einer Mehrzahl von Schlauchfiltern und einem Überwachungssystem; und
- FIG 2: ein Diagramm, in dem ein exemplarischer zeitlicher Verlauf eines Durchflusses und einer Durchflusscharakteristik bei zwei aufeinander folgenden Abreinigungsvorgängen dargestellt sind.

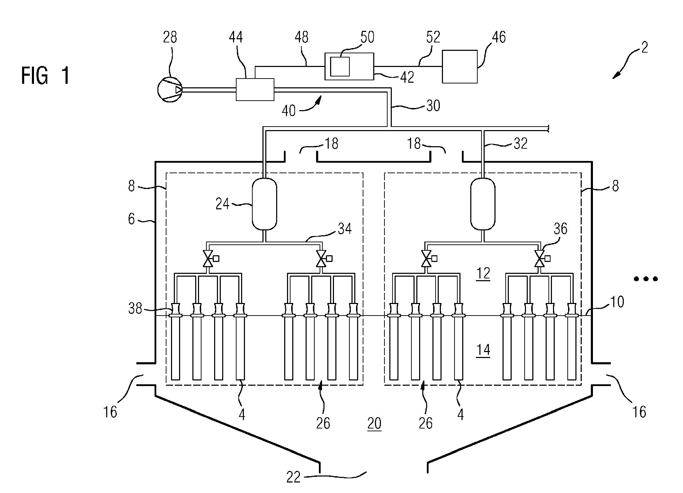

FIG 1 zeigt schematisch eine Schlauchfilteranlage 2 mit einer Mehrzahl von Schlauchfiltern 4. Die Schlauchfilteranlage 2 umfasst mehrere Filterkammern 6, die im vorliegenden Beispiel jeweils in zwei Kammersegmente 8 unterteilt sind. Grundsätzlich ist es auch möglich, dass die Filterkammern 6 jeweils nur ein Kammersegment 8 umfassen oder in mehr als zwei Kammersegmente 8 unterteilt sind. Der Übersichtlichkeit halber ist in FIG 1 lediglich eine der mehreren Filterkammern 6 exemplarisch dargestellt.

In jeder der Filterkammern 6 ist jeweils ein Lochblech 10 angeordnet, an dessen Löchern die Schlauchfilter 4 angeordnet sind und das die Filterkammer 6 in einen Reingasraum 12 und einen Rohgasraum 14 unterteilt. Der Rohgasraum 14 enthält ein zu reinigendes Abgas in einem staubhaltigen Zustand, während der Reingasraum 12 das Abgas nach seiner Entstaubung, d.h. in einem im Wesentlichen staubfreien Zustand, enthält.

Die Filterkammern 6 weisen jeweils zwei Abgaseinlässe 16 zum Einleiten eines zu entstaubenden Abgases in die Kammersegmente 8 auf. Ferner weisen die Filterkammern 6 jeweils zwei Abgasauslässe 18 zum Herausleiten des Abgases nach seiner Entstaubung auf. Dabei sind an jedem Kammersegment 8 ein Abgaseinlass 16 und ein Abgasauslass 18 angeordnet. Weiterhin umfassen die Filterkammern 6 jeweils einen Staubsammelraum 20, in dem sich aus dem Abgas entfernter Staub sammeln kann, sowie einen Staubauslass 22 zum Abführen des Staubs aus dem Staubsammelraum 20.

In den Filterkammern 6 sind jeweils acht der Schlauchfilter 4 sowie ein als Gasbehälter ausgeführter, mit einem Druckgas gefüllter Druckgasspeicher 24 angeordnet, wobei die acht Schlauchfilter 4 in zwei Schlauchfiltergruppen 26 mit je vier Schlauchfiltern 4 unterteilt sind. Im vorliegenden Ausführungsbeispiel handelt es sich bei dem Druckgas um Druckluft.

Die Schlauchfilteranlage 2 ist darüber hinaus mit einem Kompressor 28 ausgestattet, der mit einer Hauptdruckgasleitung 30 verbunden ist. Die Hauptdruckgasleitung 30 wiederum ist mit anderen Druckgasleitungen 32 verbunden, von denen jede jeweils mit einem der Druckgasspeicher 24 verbunden ist. Mithilfe des Kompressors 28 kann somit das Druckgas in die Druckgasspeicher 24 nachgefüllt werden.

Die Schlauchfilter 4 sind mithilfe weiterer Druckgasleitungen 34, die mit den Druckgasspeichern 24 verbunden sind, mit dem Druckgas versorgbar. Dabei sind die in einem gemeinsamen Kammersegment 8 angeordneten Schlauchfiltergruppen 26 aus einem gemeinsamen Druckgasspeicher 24 mit dem Druckgas versorgbar.

Zum Steuern einer Druckgaszufuhr zu den Schlauchfiltern 4 ist für jede Schlauchfiltergruppe 26 jeweils ein in einer solchen weiteren Druckgasleitung 34 angeordnetes Ventil 36 vorgesehen. Bei den Ventilen 36 handelt es sich um Membranventile, die elektrisch steuerbar sind. Die einzelnen Schlauchfilter 4 der jeweiligen Schlauchfiltergruppen 26 sind mithilfe eines solchen Ventils 36 simultan mit dem Druckgas versorgbar. Zwischen den Schlauchfiltern 4 und den weiteren Druckgasleitungen 34 ist jeweils eine Venturidüse 38 angeordnet, die dazu vorgesehen ist, einem Druckgasstrom, welcher vom jeweiligen Ventil 36 geschaltet wird, zur Verstärkung noch zusätzlich Umgebungsluft oder ein anderes Gas/Gasgemisch beizufügen, bevor der Druckgasstrom in den entsprechenden Schlauchfilter 4 eingeleitet wird.

Im vorliegenden Ausführungsbeispiel umfasst die Schlauchfilteranlage 2 pro Filterkammer 6 eine geringere Anzahl an Ventilen 36, eine geringere Anzahl an Druckgasspeichern 24, und eine geringere Anzahl Schlauchfiltern 4 als eine typische industrielle Schlauchfilteranlage. Die geringere Anzahl der jeweiligen Elemente dient lediglich der Übersichtlichkeit von FIG 1 und soll die Erfindung nicht auf genau diese Anzahl beschränken.

Weiterhin umfasst die Schlauchfilteranlage 2 ein Überwachungssystem 40 mit einer Kontrolleinheit 42 zum Steuern einer druckgasbasierten Abreinigung der Schlauchfilter 4, einem Durchflusssensor 44 zum Ermitteln eines Durchflusses einer Druckgasströmung und einem Anzeige-/Bediengerät 46.

Der Durchflusssensor 44 ist in der Hauptdruckgasleitung 30 angeordnet und ist im vorliegenden Ausführungsbeispiel als Volumenstromsensor ausgeführt. Alternativ könnte der Durchflusssensor 44 als Massenstromsensor ausgeführt sein. Ferner ist der Durchflusssensor 44 dazu eingerichtet, ein Durchflusssignal bereitzustellen, welches dem ermittelten Durchfluss entspricht, und dieses Durchflusssignal an die Kontrolleinheit 42 zu übermitteln. Die Übermittlung des Durchflusssignals erfolgt über eine Datenleitung 48, durch die der Durchflusssensor 44 mit der Kontrolleinheit 42 verbunden ist.

Die Kontrolleinheit 42 ist als programmierbarer Computer ausgeführt. Ferner umfasst die Kontrolleinheit 42 einen Datenspeicher 50, in welchen zwei Referenz-Durchflusscharakteristiken - eine vorgegebene Obergrenze und eine vorgegebene Untergrenze für die Durchflusscharakteristik - hinterlegt sind. Ein durch die beiden Referenz-Durchflusscharakteristiken definiertes Intervall repräsentiert einen intakten Zustand der Schlauchfilteranlage 2.

Des Weiteren ist in der Kontrolleinheit 42 ein Auswertealgorithmus hinterlegt. Der Auswertealgorithmus ist dazu eingerichtet, aus dem Durchflusssignal eine Durchflusscharakteristik zu berechnen. Ferner ist der Auswertealgorithmus dazu eingerichtet, die Durchflusscharakteristik mit den beiden Referenz-Durchflusscharakteristiken zu vergleichen sowie eine Trendanalyse für die Durchflusscharakteristik durchzuführen.

Weiterhin ist die Kontrolleinheit 42 dazu eingerichtet, eine Fehler-/Warnmeldung an das Anzeige-/Bediengerät 46 zu übermitteln. Die Übermittlung der Meldung erfolgt über eine weitere Datenleitung 52, durch die Kontrolleinheit 42 mit dem Anzeige-/Bediengerät 46 verbunden ist. Im vorliegenden Ausführungsbeispiel ist das Anzeige-/Bediengerät 46 ein stationärer Computer.

Darüber hinaus ist die Kontrolleinheit 42 durch zusätzliche Datenleitungen mit den Ventilen 36 verbunden und zum Steuern der Ventile 36 vorbereitet. Der Übersichtlichkeit halber sind diese zusätzlichen Datenleitungen in FIG 1 nicht dargestellt.

Um einen Abreinigungsvorgang einer der Schlauchfiltergruppen 26 zu starten, wird dasjenige Ventil 36 geöffnet, das zur Steuerung einer Druckgaszufuhr zu dieser Schlauchfiltergruppe 26 vorgesehen ist. Hierzu wird dem Ventil 36 von der Kontrolleinheit 42 ein entsprechendes Steuersignal übermittelt.

Durch das geöffnete Ventil 36 strömt das Druckgas aus dem zur Druckgasversorgung der Schlauchfiltergruppe 26 vorgesehenen Druckgasspeicher 24 zu den Venturidüsen 38 der Schlauchfiltergruppe 26. Das Druckgas wird durch die Venturidüsen 38 in die einzelnen Schlauchfilter 4 der Schlauchfiltergruppe 26 eingeleitet, wobei dem Druckgas mithilfe der Venturidüsen 38 das im Reingasraum 12 präsente, gereinigte Abgas beigefügt wird. Dadurch wird im jeweiligen Schlauchfilter 4 ein Druckstoß erzeugt, der sich in Längsrichtung des Schlauchfilters 4 ausbreitet und den Schlauchfilter 4 wellenartig quer zur Längsrichtung dehnt, wodurch ein auf dem Schlauchfilter 4 abgeschiedener Filterkuchen vom Schlauchfilter 4 abgelöst und der Schlauchfilter 4 somit abgereinigt wird.

Während dieses Vorgangs wird mithilfe des Kompressors 28 eine zum Druckgasspeicher 24 strömende Druckgasströmung erzeugt, mittels welcher der Druckgasspeicher 24 über einen Auffüllzeitraum wieder aufgefüllt wird.

Weiterhin wird mithilfe des Durchflusssensors 44 während eines vorgebbaren Zeitraums ein Durchfluss dieser Druckgasströmung ermittelt, wobei der vorgebbare Zeitraum derart vorgegeben wird, dass er innerhalb des Auffüllzeitraums liegt. Im vorliegenden Beispiel handelt es sich bei dem Durchfluss um einen Volumenstrom der Druckgasströmung. Der Durchflusssensor erzeugt ein Durchflusssignal, das dem ermittelten Durchfluss entspricht, und übermittelt dieses Durchflusssignal an die Kontrolleinheit 42.

Der Auswertealgorithmus der Kontrolleinheit 42 ermittelt/berechnet eine Durchflusscharakteristik durch ein Aufintegrieren des Durchflusssignals (und somit indirekt des Durchflusses) über den vorgebbaren Zeitraum. Die Durchflusscharakteristik wird dann im Datenspeicher 50 der Kontrolleinheit 42 gespeichert. Im vorliegenden Beispiel handelt es sich bei der Durchflusscharakteristik um eine im vorgebbaren Zeitraum durch die Hauptdruckgasleitung 30 geflossene Durchflussmenge. Diese Durchflussmenge ist gleichzeitig diejenige Durchflussmenge, die im vorgebbaren Zeitraum in den Druckgasspeicher 24 nachgefüllt wird bzw. beim Abreinigungsvorgang verbraucht wird.

Die Durchflusscharakteristik wird von der Kontrolleinheit 42 mit einer ersten Referenz-Durchflusscharakteristik (der Obergrenze für die Durchflusscharakteristik) und einer zweiten Referenz-Durchflusscharakteristik (der Untergrenze für die Durchflusscharakteristik) verglichen.

Ist Durchflusscharakteristik größer als die erste Referenz-Durchflusscharakteristik (Obergrenze) oder kleiner als die zweite Referenz-Durchflusscharakteristik (Untergrenze) wird eine Fehlermeldung an das Anzeige-/Bediengerät 46 ausgegeben.

Die Fehlermeldung enthält einen oder mehrere Vorschläge für möglicherweise vorliegende Schlauchfilteranlagendefekte, die dafür ursächlich sind, dass die Durchflusscharakteristik größer als die erste Referenz-Durchflusscharakteristik (Obergrenze) bzw. kleiner als die zweite Referenz-Durchflusscharakteristik (Untergrenze) ist.

Für den Fall, dass die Durchflusscharakteristik größer als die erste Referenz-Durchflusscharakteristik (Obergrenze) ist und somit die beim Abreinigungsvorgang verbrauchte Druckgasmenge größer als vorgesehen ist, kann ein solcher Vorschlag z.B. sein, dass ein Schlauchfilter 4 einen Riss aufweist, ein Ventil 36 sich nicht richtig schließen lässt und/oder eine Druckgasleitung 30, 32, 34 eine Leckage aufweist.

Für den Fall, dass die Durchflusscharakteristik kleiner als die zweite Referenz-Durchflusscharakteristik (Untergrenze) ist und somit die beim Abreinigungsvorgang verbrauchte Druckgasmenge kleiner als vorgesehen ist, kann ein solcher Vorschlag z.B. sein, dass ein Ventil 36 sich nicht richtig öffnen lässt.

Zudem enthält die Fehlermeldung eine eindeutige Kennzeichnung der beim Abreinigungsvorgang abgereinigten Filtergruppe 26, damit die Schlauchfilter 4 dieser Filtergruppe 26 und/oder andere mit der Filtergruppe 26 funktional verbundene Elemente der Schlauchfilteranlage 2 vom Bedienpersonal gezielt und auf ihre Funktionsfähigkeit hin untersucht werden können.

Um den Abreinigungsvorgang zu beenden, wird das Ventil 36, das zur Steuerung der Druckgaszufuhr zur abgereinigten Schlauchfiltergruppe 26 vorgesehen ist, geschlossen. Hierzu wird dem Ventil 36 von der Kontrolleinheit 42 ein entsprechendes Steuersignal übermittelt.

Nach Beendigung des Abreinigungsvorgangs wird ein Zähler zur Berechnung der Durchflusscharakteristik im Auswertealgorithmus zurückgesetzt bzw. zu Null gesetzt.

Eine Abreinigung der Schlauchfilteranlage 2 wird sequentiell durchgeführt. Das heißt, nach Beendigung des Abreinigungsvorgangs der Schlauchfiltergruppe 26 wird in einem weiteren Abreinigungsvorgang eine andere Schlauchfiltergruppe 26 der Schlauchfilteranlage 2 abgereinigt.

Außerdem werden die Schlauchfiltergruppen 26 zyklisch abgereinigt. Ein Abreinigungszyklus umfasst eine sequentielle Abreinigung aller Schlauchfiltergruppen 26 der Schlauchfilteranlage 2. Nach Ablauf des Abreinigungszyklus werden weitere solche Abreinigungszyklen durchgeführt.

Bei jedem Abreinigungsvorgang wird eine solche Durchflusscharakteristik ermittelt und im Datenspeicher 50 der Kontrolleinheit gespeichert.

Unter Verwendung der im Datenspeicher 50 gespeicherten Durchflusscharakteristiken wird eine Trendanalyse durchgeführt, bei der für jede Schlauchfiltergruppe 26 jeweils ein Trendmodell erstellt wird. Die Trendmodelle werden jeweils für eine Extrapolation zur Vorhersage der Durchflusscharakteristik bei künftigen/folgenden Abreinigungsvorgängen der jeweiligen Schlauchfiltergruppe 26 verwendet. Auf diese Weise wird abgeschätzt, wie viele Abreinigungsvorgänge durchführbar sind, bis die Durchflusscharakteristik größer als die erste Referenz-Durchflusscharakteristik (Obergrenze) bzw. kleiner als die zweite Referenz-Durchflusscharakteristik (Untergrenze) ist und somit ein Schlauchfilteranlagendefekt vorliegen könnte.

Weiterhin wird von der Kontrolleinheit 42 eine Warnmeldung an das Anzeige-/Bediengerät 46 übermittelt, wenn eine abgeschätzte Anzahl der noch durchführbaren Abreinigungsvorgänge, bis die Durchflusscharakteristik größer als die erste Referenz-Durchflusscharakteristik (Obergrenze) bzw. kleiner als die zweite Referenz-Durchflusscharakteristik (Untergrenze) ist. Dadurch kann Bedienpersonal eine Wartung der Schlauchfilteranlage 2 vornehmen, bevor ein solcher Schlauchfilteranlagendefekt oder sogar ein Totalausfall eines Elements der Schlauchfilteranlage 2 vorliegt.

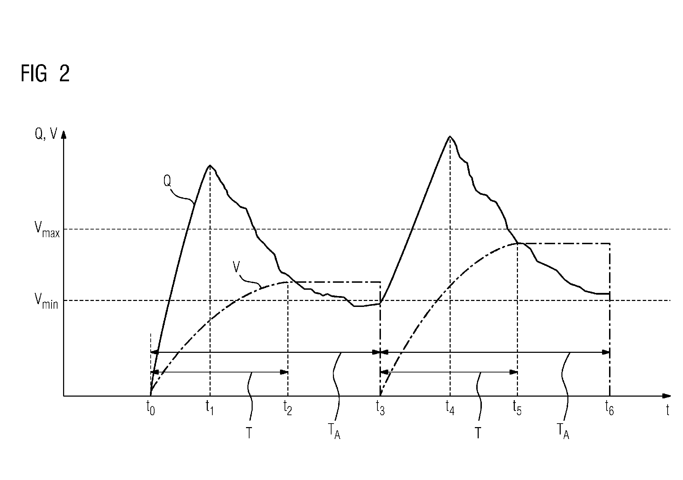

FIG 2 zeigt ein qualitatives Diagramm, in dem ein exemplarischer zeitlicher Verlauf des mithilfe des Durchflusssensors 44 ermittelten Durchflusses Q und der aus dem Durchfluss Q ermittelten Durchflusscharakteristik V bei zwei aufeinander folgenden Abreinigungsvorgängen dargestellt sind.

Auf der Abszisse des Diagramms ist eine Zeit t aufgetragen und auf der Ordinate des Diagramms sind der Durchfluss Q sowie die Durchflusscharakteristik V aufgetragen.

Das Diagramm umfasst zwei horizontale, gestrichelte Linien. Die obere dieser beiden Linien repräsentiert die erste Referenz-Durchflusscharakteristik Vₘₐₓ (Obergrenze) und die untere dieser beiden Linien repräsentiert die zweite Referenz-Durchflusscharakteristik Vₘᵢₙ (Untergrenze).

Zu einem Zeitpunkt t₀ wird ein erster Abreinigungsvorgang gestartet, bei dem eine der Schlauchfiltergruppen 26 wie oben beschrieben abgereinigt wird. Für eine Erzeugung der Druckstöße in den einzelnen Schlauchfiltern 4 der Schlauchfiltergruppe 26 wird das Druckgas aus einem Druckgasspeicher 24 verbraucht, wodurch ein Gasdruck im Druckgasspeicher 24 abnimmt. Während des ersten Abreinigungsvorgangs wird mithilfe des Kompressors 28 eine zum Druckgasspeicher 24 strömende Druckgasströmung erzeugt, mittels welcher der Druckgasspeicher 24 wieder aufgefüllt wird.

Vom Zeitpunkt t₀ bis einem Zeitpunkt t₁ nimmt der Durchfluss Q bei Null beginnend zu. Ab dem Zeitpunkt t₁ bis zu einem Zeitpunkt t₃, bei dem der erste Abreinigungsvorgang beendet wird, nimmt der Durchfluss Q ab. Denn ab dem Zeitpunkt t₁ ist der Gasdruck im Druckgasspeicher 24 wieder annähernd so groß ist wie vor Beginn des ersten Abreinigungsvorgangs, sodass pro Zeiteinheit eine geringere Druckgasmenge vom Kompressor 28 zum Druckgasspeicher 24 strömt als vor dem Zeitpunkt t₁, als der Gasdruck geringer ist.

Der Druckgasspeicher 24 wird während des gesamten ersten Abreinigungsvorgangs aufgefüllt. Ein Auffüllzeitraum T_{A} des ersten Abreinigungsvorgangs umfasst also die gesamte Zeitspanne vom Zeitpunkt t₀ bis zum Zeitpunkt t₃.

Durch ein Aufintegrieren des Durchflusses Q über den vorgebbaren Zeitraum T wird die Durchflusscharakteristik V ermittelt. Der vorgebbarer Zeitraum T ist derart vorgegeben, dass die Ermittlung der Durchflusscharakteristik V zeitgleich mit dem ersten Abreinigungsvorgang, d.h. zum Zeitpunkt t₀, startet und zu einem Zeitpunkt t₂ endet, der vor dem Ende des ersten Abreinigungsvorgangs (zum Zeitpunkt t₃) liegt.

Im vorgebbaren Zeitraum T, d.h. solange die Ermittlung der Durchflusscharakteristik V nicht abgeschlossen ist, nimmt ein Momentanwert der Durchflusscharakteristik V monoton zu. Ab dem Zeitpunkt t₂, d.h. sobald die Ermittlung der Durchflusscharakteristik V abgeschlossen ist, bleibt die Durchflusscharakteristik V bis zum Ende des ersten Abreinigungsvorgangs konstant. Beim ersten Abreinigungsvorgang liegt die Durchflusscharakteristik V, sobald ihre Ermittlung abgeschlossen ist, zwischen der ersten Referenz-Durchflusscharakteristik Vₘₐₓ und der zweiten Referenz-Durchflusscharakteristik Vₘᵢₙ.

Zum Zeitpunkt t₃, d.h. unmittelbar nach dem ersten Abreinigungsvorgang, wird ein zweiter Abreinigungsvorgang gestartet, bei dem eine andere der Schlauchfiltergruppen 26 unter Verwendung des gleichen Druckgasspeichers 24 abgereinigt. Vom Zeitpunkt t₃ bis einem Zeitpunkt t₄ nimmt der Durchfluss Q zu. Ab dem Zeitpunkt t₄ bis zu einem Zeitpunkt t₆, bei dem der zweite Abreinigungsvorgang beendet wird, nimmt der Durchfluss Q ab.

Analog zum ersten Abreinigungsvorgang wird der Druckgasspeicher 24 während des gesamten zweiten Abreinigungsvorgangs aufgefüllt, wobei der zweite Abreinigungsvorgang im vorliegenden Beispiel eine gleiche Dauer umfasst wie der erste Abreinigungsvorgang. Der Auffüllzeitraum T_{A} umfasst somit die gesamte Zeitspanne vom Zeitpunkt t₃ bis zum Zeitpunkt t₆. Prinzipiell ist es aber auch möglich, für die einzelnen Abreinigungsvorgänge unterschiedliche Dauern vorzusehen.

Auch beim zweiten Abreinigungsvorgang wird durch ein Aufintegrieren des Durchflusses Q über den gleichen vorgebbaren Zeitraum T die Durchflusscharakteristik V ermittelt. In analoger Weise ist der vorgebbare Zeitraum T beim zweiten Abreinigungsvorgang derart vorgegeben, dass die Ermittlung der Durchflusscharakteristik V zeitgleich mit dem zweiten Abreinigungsvorgang, d.h. zum Zeitpunkt t₃, startet und zu einem Zeitpunkt t₅ endet, der vor dem Ende des zweiten Abreinigungsvorgangs (zum Zeitpunkt t₆) liegt.

Anders als beim ersten Abreinigungsvorgang ist der Durchfluss Q bei Beginn des zweiten Abreinigungsvorgangs größer als Null, was daran liegt, dass die Druckgasströmung vom ersten Abreinigungsvorgang zum Zeitpunkt t₃ noch nicht vollständig abgeklungen ist. Folglich ist die beim zweiten Abreinigungsvorgang ermittelte Durchflusscharakteristik V größer als beim ersten Abreinigungsvorgang. Würde man einen so großen zeitlichen Abstand zwischen den Abreinigungsvorgängen vorsehen, dass der Durchfluss Q bei Beginn des zweiten Abreinigungsvorgangs bereits auf Null abgeklungen wäre, könnte die Durchflusscharakteristik V beim zweiten Abreinigungsvorgang gleich groß sein wie beim ersten Abreinigungsvorgang.

Auch beim zweiten Abreinigungsvorgang liegt die Durchflusscharakteristik V, sobald ihre Ermittlung abgeschlossen ist (d.h. ab dem Zeitpunkt t₅), zwischen der ersten Referenz-Durchflusscharakteristik Vₘₐₓ und der zweiten Referenz-Durchflusscharakteristik Vₘᵢₙ.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen.

## Patentansprüche

1. Verfahren zur Überwachung einer druckgasbasierten Abreinigung bei einer Schlauchfilteranlage (2), bei dem bei einem Abreinigungsvorgang während eines vorgebbaren Zeitraums (T) ein Durchfluss (Q) einer Druckgasströmung ermittelt wird, unter Verwendung des ermittelten Durchflusses (Q) der Druckgasströmung eine Durchflusscharakteristik (V) ermittelt wird und unter Verwendung der Durchflusscharakteristik (V) die druckgasbasierte Abreinigung überwacht wird.

2. Verfahren nach Anspruch 1,
**dadurch gekennzeichnet, dass** die Durchflusscharakteristik (V) ein Derivat des Durchflusses (Q), insbesondere eine im vorgebbaren Zeitraum (T) geflossene Druckgasmenge oder ein Zeitverhalten des Durchflusses (Q), ist.

3. Verfahren nach Anspruch 1 oder 2,
**dadurch gekennzeichnet, dass** die Durchflusscharakteristik (V) durch ein Aufintegrieren, ein Ableiten und/oder eine Fourier-Analyse des Durchflusses (Q) ermittelt wird.

4. Verfahren nach einem der vorhergehenden Ansprüche,
**dadurch gekennzeichnet, dass** der Abreinigungsvorgang ein Auffüllen zumindest eines Druckgasspeichers (24) während eines Auffüllzeitraums (T_{A}) umfasst, wobei der Druckgasspeicher (24) unter Verwendung der Druckgasströmung aufgefüllt wird, deren Durchfluss (Q) ermittelt wird, und der vorgebbare Zeitraum (T) innerhalb des Auffüllzeitraums (T_{A}) liegt.

5. Verfahren nach einem der vorhergehenden Ansprüche,
**dadurch gekennzeichnet, dass** die Überwachung ein Vergleichen der ermittelten Durchflusscharakteristik (V) mit zumindest einer vorgegebenen Referenz-Durchflusscharakteristik (Vₘₐₓ, Vₘᵢₙ) umfasst.

6. Verfahren nach Anspruch 5,
**dadurch gekennzeichnet, dass** bei der Überwachung eine Fehlermeldung ausgegeben wird, falls die ermittelte Durchflusscharakteristik (V) einer vorgegebenen Bedingung hinsichtlich der Referenz-Durchflusscharakteristik (Vₘₐₓ, Vₘᵢₙ) genügt.

7. Verfahren nach einem der vorhergehenden Ansprüche,
**dadurch gekennzeichnet, dass** beim Abreinigungsvorgang zumindest ein Druckstoß erzeugt wird.

8. Verfahren nach einem der vorhergehenden Ansprüche, eingesetzt zur Detektion eines Schlauchfilteranlagendefekts, insbesondere eines Defekts eines Ventils (36), einer Druckgasleitung (30, 32, 34) und/oder eines Schlauchfilters (4), wobei die Durchflusscharakteristik (V) mit zumindest einer vorgegebenen Referenz-Durchflusscharakteristik (Vₘₐₓ, Vₘᵢₙ) verglichen wird, die eine intakte Schlauchfilteranlage (2), insbesondere ein intaktes Ventil (36), eine intakte Druckgasleitung (30, 32, 34) und/oder einen intakten Schlauchfilter (4), repräsentiert.

9. Verfahren nach einem der vorhergehenden Ansprüche, durchgeführt bei einer Mehrzahl solcher Abreinigungsvorgänge, wobei bei mehreren dieser Abreinigungsvorgänge jeweils eine solche Durchflusscharakteristik (V) ermittelt wird und unter Verwendung der Durchflusscharakteristiken (V) eine Trendanalyse durchgeführt wird, bei der zumindest ein Trendmodell erstellt wird.

10. Verfahren nach Anspruch 9,
eingesetzt zur Früherkennung eines Schlauchfilteranlagendefekts, insbesondere eines Defekts eines Ventils (36), einer Druckgasleitung (30, 32, 34) und/oder eines Schlauchfilters (4), wobei unter Verwendung des Trendmodells ermittelt wird, wie viele Abreinigungsvorgänge durchführbar sind, bis ein solcher Schlauchfilteranlagendefekt auftritt.

11. Überwachungssystem (40) für eine Schlauchfilteranlage (2),
aufweisend zumindest einen Durchflusssensor (44) zum Ermitteln eines Durchflusses (Q) einer Druckgasströmung und eine Kontrolleinheit (42) zum Steuern einer druckgasbasierten Abreinigung,
**dadurch gekennzeichnet, dass** die Kontrolleinheit (42) zur Durchführung des Verfahrens nach einem der vorhergehenden Ansprüche eingerichtet ist.

12. Schlauchfilteranlage (2) mit einer Mehrzahl von Schlauchfiltern (4) und einem Überwachungssystem (40) nach Anspruch 11.

13. Schlauchfilteranlage (2) nach Anspruch 12, **gekennzeichnet durch** zumindest einen Druckgasspeicher (24) und zumindest eine Druckgasleitung (30, 32, 34) zur Versorgung des Druckgasspeichers (24) mit einem Druckgas, wobei der Durchflusssensor (44) des Überwachungssystems (40) in der Druckgasleitung (30, 32, 34) angeordnet ist.

14. Schlauchfilteranlage (2) nach Anspruch 12, **gekennzeichnet durch** mehrere Druckgasspeicher (24) und eine Hauptdruckgasleitung (30) zur Versorgung der mehreren Druckgasspeicher (24) mit Druckgas, wobei der Durchflusssensor (44) des Überwachungssystems (40) in der Hauptdruckgasleitung (30) angeordnet ist.

15. Verfahren nach Anspruch 6,
eingesetzt bei einer Schlauchfilteranlage (2) nach Anspruch 14 zur Detektion eines Defekts eines Ventils (36).
